# EUROPÄISCHE PATENTANMELDUNG

(11) **EP 3 789 943 A1**
(43) Veröffentlichungstag der Anmeldung: **10.03.2021**
(21) Anmeldenummer: 20190616.1
(22) Anmeldetag: 12.08.2020
(51) Int. Cl.: G06Q 10/06

(54) **VERFAHREN UND COMPUTERPROGRAMMPRODUKT ZUM BESTIMMEN VON BEWEGUNGSSTRÖMEN VON PERSONEN**

(30) Priorität: 03.09.2019 DE 102019123523
(71) Anmelder: Innogy SE, 45128 Essen (DE)
(72) Erfinder: Flegel, Marc, 45259 Essen (DE)
(74) Vertreter: Cohausz & Florack

(57) **Zusammenfassung**

Verfahren zum Bestimmen von Bewegungsströmen von Personen umfassend das Festlegen von zumindest drei räumlich voneinander getrennten Aufenthaltsorten für die Personen, das Bestimmen von Bewegungsgraphen von Bewegungen der Personen zwischen jeweils zwei der Aufenthaltsorte, das Erfassen einer Anzahl an Personen an den jeweiligen Aufenthaltsorten, und das Prognostizieren der Anzahl an Personen an den jeweiligen Aufenthaltsorten nach einer bestimmten Zeit unter Verwendung der Bewegungsgraphen.

## Beschreibung

Der Gegenstand betrifft ein Verfahren und Computerprogrammprodukt zum Bestimmen von Bewegungsströmen von Personen.

Das Erfassen und Bestimmen von Bewegungsströmen von Personen ist insbesondere bei Großveranstaltungen, in Freizeitparks oder dergleichen von hohem Interesse. Insbesondere ist es von hohem Interesse, den Nutzern (Besuchern, Fahrgästen. etc.) Informationen über zukünftige Wartezeiten an bestimmten Attraktionen oder Lokationen anzeigen zu können. Hierfür ist es notwendig, im Voraus prognostizieren zu können, wie viele Personen an welcher Lokation erwartet werden, um hieraus eine erwartete Wartezeit bestimmen zu können. Auch ist es notwendig, Bewegungsströme prognostizieren zu können, um gegebenenfalls steuernd eingreifen zu können, um gegebenenfalls unerwünschte Menschenmassen zu verhindern.

Dem Gegenstand lag daher die Aufgabe zugrunde, Bewegungsströme von Personen prognostizieren zu können.

Diese Aufgabe wird durch ein Verfahren nach Anspruch 1 sowie ein Computerprogrammprodukt nach Anspruch 14 gelöst.

Zunächst sind Attraktionen, Warteorte, Lokationen etc. räumlich zu definieren. Aus diesem Grunde wird vorgeschlagen, dass zumindest drei räumlich voneinander getrennte Aufenthaltsorte für Personen festgelegt werden. Das Festlegen der Aufenthaltsorte kann durch Definition eines virtuellen oder tatsächlichen Zauns um einen Ort herum erfolgen. Häufig ist ein Aufenthaltsort ein Wartebereich vor einer Attraktion, einem Fahrgeschäft etc.

Aufenthaltsorte können beispielsweise Warteschlangen an Attraktionen, Skiliften, Gondeln, Fähren, Sesselliften, Fahrattraktionen oder dergleichen sein. Eine Anzahl von Personen, insbesondere zumindest drei oder mehr Personen können sich jeweils an einem der Aufenthaltsorte aufhalten. Der Aufenthaltsort ist ein Ort vor einem sogenannten "Server", also einer Entität, die Personen bestimmte Dienste erbringt.

Neben der Definition der Aufenthaltsorte werden Bewegungsgraphen von Bewegungen der Personen zwischen jeweils zwei der Aufenthaltsorte bestimmt. Ein Bewegungsgraph ist durch einen Startpunkt und einen Endpunkt sowie eine Wegedauer zwischen dem Startpunkt und dem Endpunkt definiert. Ein Startpunkt eines Bewegungsgraphen kann ein Auslass an einem ersten Aufenthaltsort sein. Ein Endpunkt eines Bewegungsgraphen kann ein Einlass an einem zweiten Aufenthaltsort sein. Bevorzugt werden alle möglichen Bewegungsgraphen zwischen allen Aufenthaltsorten permutierend bestimmt.

Um nun prognostizieren zu können, wie viele Personen in Zukunft an einem Aufenthaltsort sind, wird vorgeschlagen, dass die Anzahl der Personen an den jeweiligen Aufenthaltsorten nach einer bestimmten Zeit unter Verwendung der Bewegungsgraphen prognostiziert wird. Ist bekannt, wie viele Personen an einem Aufenthaltsort sind und ist ferner bekannt, wie sich die Personen von diesem Aufenthaltsort zu einem anderen entlang der Bewegungsgraphen bewegen, lässt sich für die Zukunft in definierten Zeitabständen prognostizieren, wie die Anzahl der Personen an einem Aufenthaltsort sich verändert.

Gemäß einem Ausführungsbeispiel wird vorgeschlagen, dass einem Bewegungsgraph eine Nutzungswahrscheinlichkeit und/oder eine Wegedauer zugeordnet werden. Wenn von einem Aufenthaltsort zwei oder mehr Bewegungsgraphen zu anderen Aufenthaltsorten abzweigen, so kann eine Nutzungswahrscheinlichkeit jedes Bewegungsgraphen bestimmt werden. Die Nutzungswahrscheinlichkeit gibt an, mit welcher Wahrscheinlichkeit eine Person einen von zumindest zwei Bewegungsgraphen ausgehend von einem Aufenthaltsort wählt. Diese Nutzungswahrscheinlichkeit ist relevant für die Prognose der Anzahl der Personen an den Aufenthaltsorten der Endpunkte der Bewegungsgraphen. Ferner kann jedem Bewegungsgraph eine Wegedauer zugeordnet werden. Das heißt, dass zwischen zwei Aufenthaltsorten unterschiedlich lange Wege notwendig sein können. Um nach der definierten Zeit die Anzahl der Personen an einem Aufenthaltsort prognostizieren zu können, ist es sinnvoll, festzustellen, wie lange eine Person von einem Startpunkt zu einem Endpunkt eines Bewegungsgraphen benötigt. Diese Information kann bei der Prognose berücksichtigt werden.

Gemäß einem Ausführungsbeispiel wird vorgeschlagen, dass die Nutzungswahrscheinlichkeit dynamisch abhängig von aktuellen Nutzungsinformationen bestimmt wird. Es ist möglich, mit Hilfe von Überwachungstechnologien festzustellen, welche Nutzungswahrscheinlichkeit für jeweils einen Bewegungsgraph besteht. Die Nutzung der Bewegungsgraphen kann sich dynamisch ändern, so dass die Nutzungswahrscheinlichkeit dynamisch bestimmt werden kann. Es ist beispielsweise möglich, mittels Video, Lichtschranken, Lidar, Nahfelderkennung oder dergleichen zu bestimmen, welchen Bewegungsgraph eine Person ausgehend von einem Ausgang eines ersten Aufenthaltsorts wählt. Die Technologien zur Bestimmung der Nutzungsinformationen werden nachfolgend noch näher beschrieben.

Auch kann eine Wegezeit bestimmt werden, die jeweils eine Person von einem Startpunkt zu einem Endpunkt eines Bewegungsgraphen benötigt. Hierzu können die gleichen Technologien verwendet werden, wie für die Bestimmung der Nutzungsinformationen. Beispielsweise ist es möglich, ein mobiles Gerät eines Nutzers zu orten. Ein mobiles Gerät kann beispielsweise ein Mobiltelefon oder ein sogenanntes Wearable, wie beispielsweise eine Smartwatch, Smartglasses oder dergleichen sein. Diese Geräte können Nahfeld- als auch Fernfeldfunktechnologie aufweisen. Mittels sogenannten "probe request" und "probe response"-Verfahren ist es möglich, ein Gerät eindeutig zu identifizieren und insbesondere auch festzustellen, wie lange die Wegezeit dieses Gerätes, mithin der Person, die das Gerät mit sich führt ist.

Gemäß einem Ausführungsbeispiel wird vorgeschlagen, dass die Nutzungswahrscheinlichkeit dynamisch abhängig von Umweltparametern bestimmt wird. Je nach beispielsweise Wetterlage, insbesondere Windverhältnissen und/oder Regenverhältnissen kann eine Nutzung variieren. Die Nutzungswahrscheinlichkeit kann abhängig von Umweltparametern, wie beispielsweise Windrichtung, Windstärke, Regen, Niederschlagsmenge, Sonnenstand und dergleichen bestimmt werden.

Gemäß einem Ausführungsbeispiel wird vorgeschlagen, dass für jeweils einen der Aufenthaltsorte eine Warteschlange aus einer Anzahl aus Personen bestimmt wird und dass die Prognose zusätzlich abhängig von der Warteschlange ist. Eine Warteschlange kann beispielsweise eine Anzahl an Personen innerhalb des Aufenthaltsortes sein. Kann mit Hilfe der Bewegungsgraphen eine Prognose für andere Aufenthaltsorte bestimmt werden, kann die Prognose um die Warteschlange ergänzt werden.

Gemäß einem Ausführungsbeispiel wird vorgeschlagen, dass für jeweils einen der Aufenthaltsorte die Warteschlange mit Hilfe einer Nahfeldabfrage, insbesondere einer "probe request"-Abfrage bestimmt wird. Eine Nahfeldabfrage kann beispielsweise eine Funkabfrage sein. Eine Nahfeldabfrage kann beispielsweise mobile Geräte von Personen abfragen. Eine Nahfeldabfrage kann beispielsweise eine Bluetooth-Abfrage, insbesondere unter Verwendung eines Bluetooth Beacon sein. Auch kann eine Nahfeldabfrage ein sogenanntes "challenge and response"-Verfahren sein, beispielsweise im Rahmen eines "probe request"- und "probe response" Verfahrens. Ein solches Verfahren ist beispielsweise im Standard IEEE 802.11 definiert. Mobile Geräte können sogenannte "probe requests" aussenden. Diese "probe requests" enthalten Identifikationen der mobilen Geräte, beispielsweise eine MAC-Adresse. Ein Acess Point oder ein Router kann die Anzahl der "probe requests" in einem Zeitintervall zählen und hieraus eine entsprechende Anzahl an Personen innerhalb der Warteschlange bestimmen.

Gemäß einem Ausführungsbeispiel wird vorgeschlagen, dass für jeweils einen der Aufenthaltsorte die Warteschlange mit Hilfe einer Lidar-Messung bestimmt wird. Mit Hilfe einer Lidar-Messung ist es beispielsweise möglich, einzelne Personen voneinander zu unterscheiden und so eine Anzahl von Personen in der Warteschlange zu bestimmen.

Gemäß einem Ausführungsbeispiel wird vorgeschlagen, dass für jeweils einen der Aufenthaltsorte die Warteschlange mit Hilfe einer Mustererkennung in einem Bild eines Aufenthaltsortes bestimmt wird. Beispielsweise ist es möglich, mit Hilfe von einer oder mehreren Kameras Bilder des Aufenthaltsortes zu erfassen. In diesen Bildern können Personen mit Hilfe geeigneter Mustererkennungsverfahren detektiert und gezählt werden. Somit kann durch Auswertung des Bildes die Anzahl der Personen in der Warteschlange bestimmt werden.

Gemäß einem Ausführungsbeispiel wird vorgeschlagen, dass für jeweils einen der Aufenthaltsorte die Warteschlange mit einer Radar-Messung bestimmt wird. Beispielsweise können Bewegungsprofile mit Hilfe von Doppler-Radar-Messungen erfasst werden. Auch kann mit Hilfe einer Radar-Messung eine Anzahl an Personen in der Warteschlange bestimmt werden.

Um die Veränderung der Warteschlange, insbesondere die Anzahl der Personen in der Warteschlange bestimmen zu können, kann an zumindest einem der Aufenthaltsorte ein Einlassgatter für Personen angeordnet sein. Ein Einlassgatter kann beispielsweise eine Lichtschranke oder ein Drehkreuz sein. Das Einlassgatter kann eine Einlassrate haben. Bei einer Lichtschranke ist die Einlassrate unbegrenzt. Bei einem Drehkreuz kann die Einlassrate variiert werden. Die Einlassrate kann bestimmt werden durch die Anzahl an Personen pro Zeiteinheit. Die Einlassrate kann von unbegrenzt bis z.B. eine Person pro Stunde variiert werden.

Personen kommen beispielsweise an Aufenthaltsorten gemäß einer Poisson-Verteilung an. Insbesondere an einem ersten Aufenthaltsort, beispielsweise einem Eingang zu einem Freizeitpark, einem Eingang zu einem Skigebiet, einem Eingang eines Transportunternehmens oder dergleichen kann die Ankunftsrate poissonverteilt sein.

Gemäß einem Ausführungsbeispiel wird vorgeschlagen, dass an zumindest einem der Aufenthaltsorte zumindest ein Auslassgatter für Personen angeordnet wird. Ein Auslassgatter kann wie ein Einlassgatter gebildet sein. Ein Auslassgatter kann eine Auslassrate haben. Mit Hilfe des Auslassgatters ist feststellbar, mit welcher Rate Personen den Aufenthaltsort verlassen. Die Rate kann in Personen pro Zeiteinheit bestimmt sein. Anhand der Auslassrate unter Verwendung der Bewegungsgraphen, insbesondere der Nutzungswahrscheinlichkeiten, lässt sich prognostizieren, welche Anzahl an Personen zu welchen anderen Aufenthaltsorten sich bewegen und zu welcher Zeit sie dort ankommen.

Gemäß einem Ausführungsbeispiel wird vorgeschlagen, dass an zumindest einem der Aufenthaltsorte zumindest eine mittlere Aufenthaltsdauer für Personen bestimmt wird. Durch beispielsweise die Nahfeldabfrage kann festgestellt werden, wie lange sich eine Person respektive dessen Mobilgerät innerhalb eines Aufenthaltsortes aufhält. Damit kann die Aufenthaltsdauer bestimmt werden. Insbesondere ist es möglich, eine mittlere Aufenthaltsdauer aller Personen an einem Aufenthaltsort dynamisch zu bestimmen.

Gemäß einem Ausführungsbeispiel wird vorgeschlagen, dass ein Bewegungsgraph zwischen einem Auslassgatter eines ersten der Aufenthaltsorte und einem Einlassgatter eines zweiten der Aufenthaltsorte bestimmt wird. Der Bewegungsgraph bestimmt somit die Bewegung einer Person von einem bestimmten Auslassgatter zu einem bestimmten Einlassgatter.

Gemäß einem Ausführungsbeispiel wird vorgeschlagen, dass Personen an zumindest einem der Server mit einer bestimmbaren Abfertigungsrate abgefertigt werden. In einem solchen Fall kann beispielsweise ein Auslassgatter verzichtbar sein. Basierend auf der Warteschlange sowie der Abfertigungsrate lässt sich eine Auslassrate bestimmen und somit unter Verwendung der Bewegungsgraphen eine Prognose für weitere Aufenthaltsorte bestimmen.

Gemäß einem Ausführungsbeispiel wird vorgeschlagen, dass für jeweils einen der Aufenthaltsorte die Einlassrate, die Auslassrate, die Abfertigungsrate und/oder die Aufenthaltsdauer bestimmt wird und dass die Prognose zusätzlich abhängig von der Einlassrate, Auslassrate, Abfertigungsrate und/oder Aufenthaltsdauer ist. Auch kann eine mittlere Aufenthaltsdauer bestimmt werden und die Prognose hiervon abhängig sein.

Weitere Aspekte sind ein Computerprogrammprodukt nach Anspruch 13 und 14. Insbesondere kann das Computerprogrammprodukt als Applikation auf einem mobilen Gerät installiert sein und beispielsweise eine grafische Benutzeroberfläche generieren. Auf dieser grafischen Nutzeroberfläche können die Aufenthaltsorte in Relation zueinander dargestellt werden. Auch ist es möglich, den Aufenthaltsorten zugeordnet eine Warteschlange, eine Wartedauer, eine Prognose einer Warteschlange oder dergleichen anzuzeigen.

Nachfolgend wird der Gegenstand anhand einer Ausführungsbeispiele zeigenden Zeichnung näher erläutert. In der Zeichnung zeigen:
- Fig. 1a, b: verschiedene Aufenthaltsorte;
- Fig. 2: ein Mapping zwischen Aufenthaltsorten und Bewegungsgraphen;
- Fig. 3: die Prognose von Personenanzahlen basierend auf Bewegungsgraphen und Informationen zu Aufenthaltsorten;
- Fig. 4: die Erfassung von Personen an einem Aufenthaltsort;
- Fig. 5: die Erfassung von Personen an einem Aufenthaltsort gemäß einem weiteren Ausführungsbeispiel.

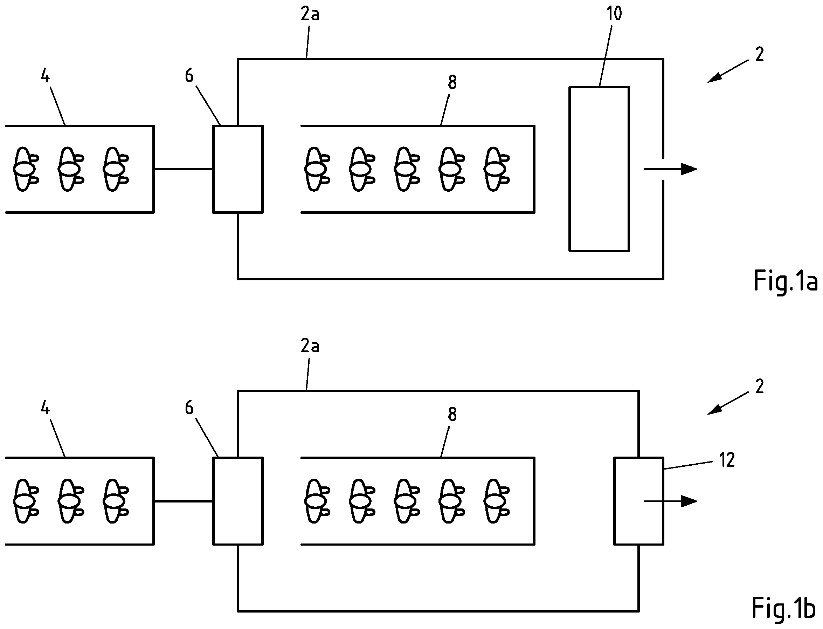

Fig. 1a zeigt einen Aufenthaltsort 2. Ein Aufenthaltsort 2 kann auch als Aufenthaltsbereich bezeichnet werden.

Ein Aufenthaltsort 2 kann beispielsweise durch einen Zaun 2a oder dergleichen abgegrenzt sein.

Eingangsseitig eines Aufenthaltsorts 2 kann eine Warteschlange 4 vorhanden sein. Die Warteschlange 4 kann aus einer oder mehreren Personen gebildet sein. Die Warteschlange 4 umfasst eine Anzahl an Personen. Die Bestimmung der Anzahl der Personen in der Warteschlange 4 sowie die mittlere Aufenthaltsdauer der Personen in der Warteschlange 4 kann mit den nachfolgend noch beschriebenen Verfahren bestimmt werden. Eine Wartezeit kann ein Zeitraum zwischen einem Eintreffen an der Warteschlange 4 und einem Eintreten aus der Warteschlange 4 durch ein Einlassgatter 6 in den Bereich des Aufenthaltsorts 2 sein.

Ein Einlassgatter 6 kann beispielsweise eine Lichtschranke, ein Drehkreuz, eine Personenschleuse oder dergleichen sein.

Befinden sich Personen innerhalb des Aufenthaltsorts 2 kann deren Anzahl anhand einer zweiten Warteschlange 8 bestimmt werden. Die Bestimmung der Anzahl der Personen in der Warteschlange 8 sowie die mittlere Aufenthaltsdauer der Personen in der Warteschlange 8 kann mit den nachfolgend noch beschriebenen Verfahren bestimmt werden.

In der Fig. 1a ist am Aufenthaltsort 2 ein als Server 10 bezeichnete Entität z.B. ein Fahrgeschäft, ein Transportmittel oder dergleichen mit einer Abfertigungsrate vorgesehen. Der Server 10 ist in der Lage, eine bestimmte Anzahl an Personen pro Zeiteinheit zu bedienen. Die durch den Server 10 bedienten Personen treten anschließend aus dem Aufenthaltsort 2 heraus und bewegen sich zu einem weiteren Aufenthaltsort 2 wie nachfolgend noch gezeigt werden wird.

Fig. 1b zeigt einen Aufenthaltsort 2 ohne Server 10, also mit einer unbegrenzten Abfertigungsrate und mit einem Auslassgatter 12. Das Auslassgatter 12 kann entsprechend dem Einlassgatter 6 gebildet sein.

Am Einlassgatter 6 lässt sich eine Einlassrate bestimmen und am Auslassgatter 12 lässt sich eine Auslassrate bestimmen. Ferner lässt sich eine mittlere Aufenthaltsdauer einer Person an dem Aufenthaltsort 2 bestimmen.

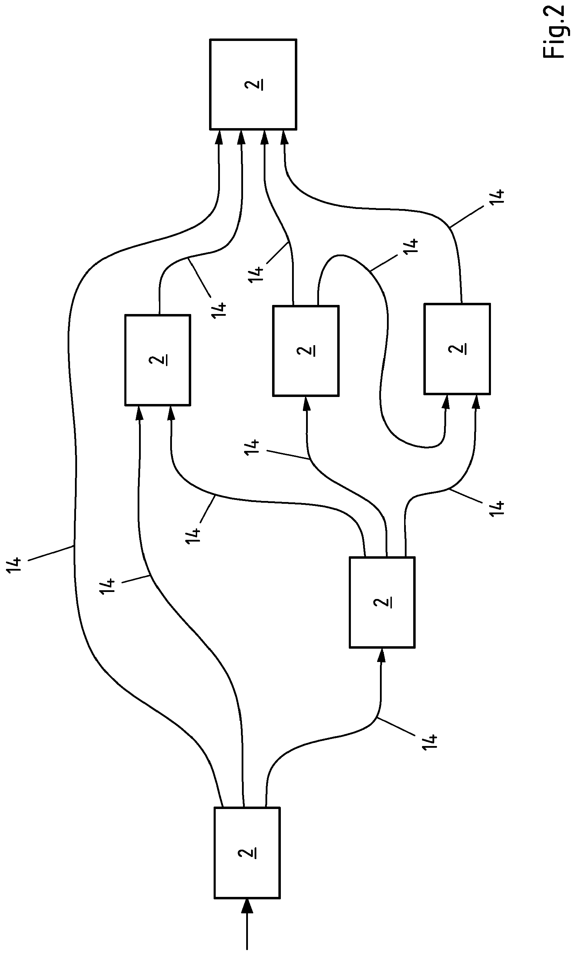

Ein oder mehrere Aufenthaltsorte 2 können wie in der Fig. 2 dargestellt von Personen angesteuert werden. Hierbei gibt es unterschiedliche Wege zwischen den Aufenthaltsorten 2 und jeder mögliche Weg ist als Bewegungsgraph 14 erfasst. Ein Bewegungsgraph 14 kann einen Anfangspunkt und einen Endpunkt haben, die beide durch jeweils einen Aufenthaltsort 2 bestimmt sind. Ein Bewegungsgraph 14 kann darüber hinaus eine Nutzungswahrscheinlichkeit aufweisen. Darüber hinaus kann jedem Bewegungsgraph 14 eine mittlere Wegedauer zugeordnet werden. Schließlich kann ein Bewegungsgraph 14 auch eine Personenkapazität aufweisen, insbesondere kann dies die Anzahl der Personen sein, die sich auf dem Weg zwischen zwei Aufenthaltsorten 2 befinden.

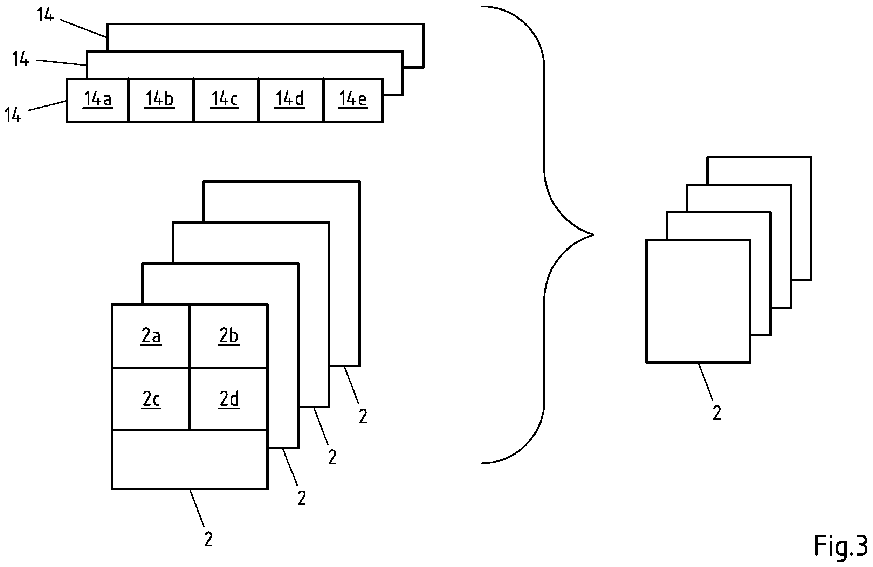

Fig. 3 zeigt die Repräsentation der Bewegungsgraphen 14 als Datensätze. Jedem Bewegungsgraph 14 ist ein Startpunkt 14a, ein Endpunkt 14b, eine Nutzungswahrscheinlichkeit 14c, eine Wegedauer 14d und optional eine Kapazität 14e zugeordnet.

Fig. 3 zeigt darüber hinaus, dass für jeden Aufenthaltsort 2 ein Datensatz vorgesehen ist. Für jeden Aufenthaltsort 2 ist zumindest eine Einlassrate 2a, eine Auslassrate 2b, eine Anzahl an Personen 2c und eine mittlere Aufenthaltsdauer 2d zugeordnet. Weitere Informationen wie z.B. eine Abfertigungsrate können vorgesehen sein.

Unter Verwendung dieser Informationen kann eine Prognose für die Anzahl an Personen an einem Aufenthaltsort 2 erstellt werden. Ferner kann eine Prognose für die Anzahl von Personen in einer Warteschlange 4 als auch eine Wartedauer erstellt werden. Die entsprechenden Informationen können in einer mobilen Applikation einem Nutzer angezeigt werden.

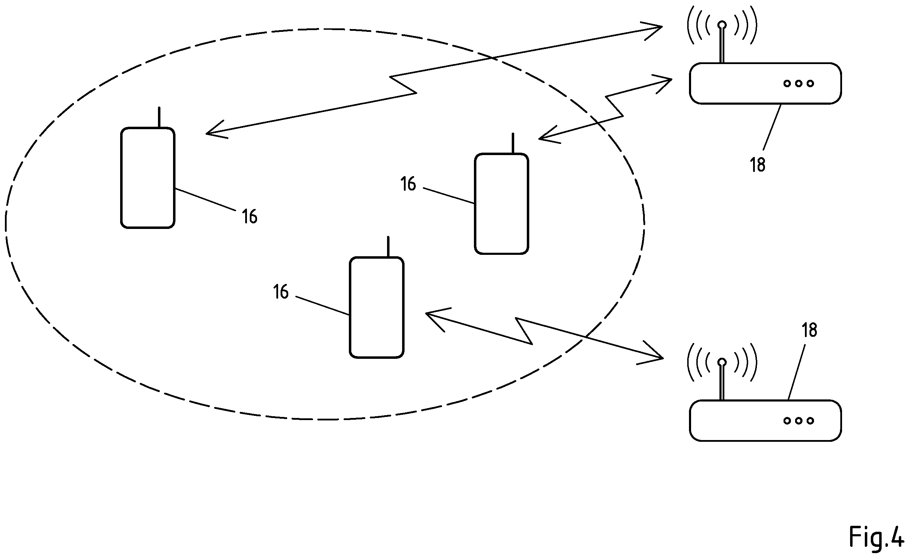

Zur Erfassung der Anzahl an Personen in einer Warteschlange 4, 8 ist eine Nahfeldabfrage, wie in Fig. 4 dargestellt, möglich. Hierbei können Mobilgeräte 16 von Personen sogenannte "probe requests" aussenden, die von Routern 18 empfangen werden. Jeder "probe request" hat eine eindeutige MAC-Adresse, mit der ein Mobilgerät 16 identifizierbar ist. Die Anzahl der "probe requests" in einem Aufenthaltsort 2 über einen definierten Zeitraum, z.B. 1 Minute, kann gezählt werden, womit die Anzahl an Personen abgeschätzt werden kann.

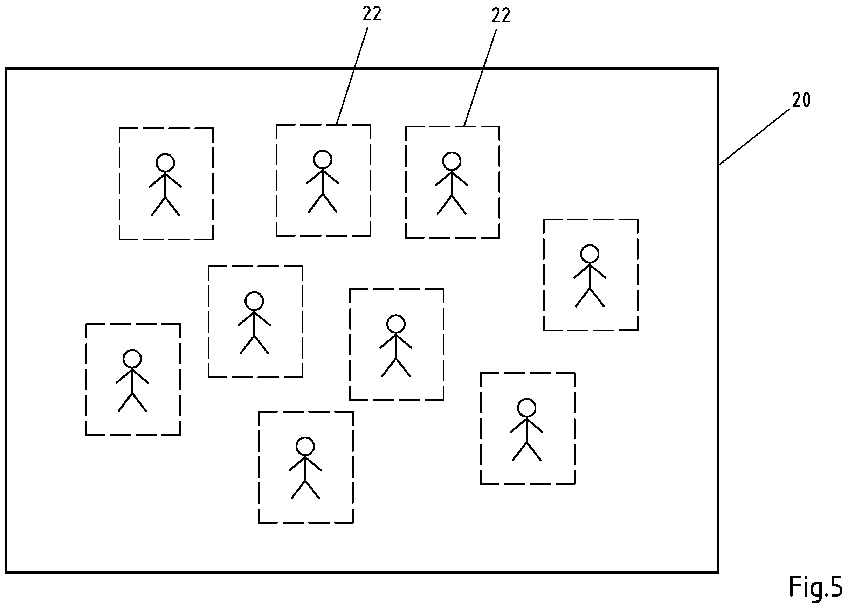

Auch ist es möglich, wie in Fig. 5 dargestellt, ein Bild 20 eines Aufenthaltsorts 2 zu erfassen und mit Hilfe von Mustererkennung Personen 22 in dem Bild 20 zu detektieren. Mit Hilfe von Mustererkennung kann die Anzahl von Personen in Warteschlangen 4, 8 festgestellt werden.

### Bezugszeichenliste

- 2: Aufenthaltsort
- 2a: Zaun
- 4: Warteschlange
- 6: Einlassgatter
- 8: Warteschlange
- 10: Server
- 12: Auslassgatter
- 14: Bewegungsgraf
- 14a: Startpunkt
- 14b: Endpunkt
- 14c: Nutzungswahrscheinlichkeit
- 14d: Wegedauer
- 16: Mobilgerät
- 18: Router
- 20: Bild
- 22: Personen

## Patentansprüche

1. Verfahren zum Bestimmen von Bewegungsströmen von Personen umfassend:
- Festlegen von zumindest drei räumlich voneinander getrennten Aufenthaltsorten für die Personen,
- Bestimmen von Bewegungsgraphen von Bewegungen der Personen zwischen jeweils zwei der Aufenthaltsorte,
- Erfassen einer Anzahl an Personen an den jeweiligen Aufenthaltsorten, und
- Prognostizieren der Anzahl an Personen an den jeweiligen Aufenthaltsorten nach einer bestimmten Zeit unter Verwendung der Bewegungsgraphen.

2. Verfahren nach Anspruch 1,
**dadurch gekennzeichnet,**
- **dass** einem Bewegungsgraph eine Nutzungswahrscheinlichkeit und/oder eine Wegedauer zugeordnet wird.

3. Verfahren nach Anspruch 2,
**dadurch gekennzeichnet,**
- **dass** die Nutzungswahrscheinlichkeit dynamisch abhängig von aktuellen Nutzungsinformationen bestimmt wird und/oder die Wegedauer dynamisch abhängig von aktuellen Wegezeiten bestimmt wird.

4. Verfahren nach Anspruch 3,
**dadurch gekennzeichnet,**
- **dass** die Nutzungswahrscheinlichkeit dynamisch abhängig von aktuellen Umweltparametern bestimmt wird und/oder die Wegedauer dynamisch abhängig von aktuellen Umweltparametern bestimmt wird.

5. Verfahren nach einem der vorangehenden Ansprüche,
**dadurch gekennzeichnet,**
- **dass** für jeweils einen der Aufenthaltsorte eine Warteschlange aus einer Anzahl an Personen bestimmt wird und
- **dass** die Prognose zusätzlich abhängig von der Warteschlange ist.

6. Verfahren nach einem der vorangehenden Ansprüche,
**dadurch gekennzeichnet,**
- **dass** für jeweils einen der Aufenthaltsorte die Warteschlange mit Hilfe einer Nahfeldabfrage, insbesondere einer Probe Request Abfrage bestimmt wird und/oder
- **dass** für jeweils einen der Aufenthaltsorte die Warteschlange mit Hilfe einer LIDAR Messung bestimmt wird und/oder
- **dass** für jeweils einen der Aufenthaltsorte die Warteschlange mit Hilfe einer Mustererkennung in einem Bild des Aufenthaltsortes bestimmt wird und/oder
- **dass** für jeweils einen der Aufenthaltsorte die Warteschlange mit Hilfe einer Radarmessung bestimmt wird.

7. Verfahren nach einem der vorangehenden Ansprüche,
**dadurch gekennzeichnet,**
- **dass** an zumindest einem der Aufenthaltsorte ein Einlassgatter für Personen mit einer bestimmbaren Einlassrate angeordnet wird.

8. Verfahren nach einem der vorangehenden Ansprüche,
**dadurch gekennzeichnet,**
- **dass** an zumindest einem der Aufenthaltsorte zumindest ein Auslassgatter für Personen mit einer bestimmbaren Auslassrate angeordnet wird.

9. Verfahren nach einem der vorangehenden Ansprüche,
**dadurch gekennzeichnet,**
- **dass** an zumindest einem der Aufenthaltsorte zumindest eine mittlere Aufenthaltsdauer für Personen bestimmt wird.

10. Verfahren nach einem der vorangehenden Ansprüche,
**dadurch gekennzeichnet,**
- **dass** ein Bewegungsgraph zwischen einem Auslassgatter eines ersten der Aufenthaltsorte und einem Einlassgatter eines zweiten der Aufenthaltsorte bestimmt wird.

11. Verfahren nach einem der vorangehenden Ansprüche,
**dadurch gekennzeichnet,**
- **dass** Personen an zumindest einem der Aufenthaltsorte mit einer bestimmbaren Abfertigungsrate abgefertigt werden.

12. Verfahren nach einem der vorangehenden Ansprüche,
**dadurch gekennzeichnet,**
- **dass** für jeweils einen der Aufenthaltsorte die Einlassrate, die Auslassrate, die Abfertigungsrate, der mittleren Aufenthaltsdauer und/oder die Aufenthaltsdauer bestimmt wird und
- **dass** die Prognose zusätzlich abhängig von der Einlassrate, Auslassrate, Abfertigungsrate, der mittleren Aufenthaltsdauer und/oder die Aufenthaltsdauer ist.

13. Computerprogrammprodukt mit Instruktionen für einen Prozessor, wobei die Instruktionen dazu eingerichtet sind, dass der Prozessor ein Verfahren nach einem der vorangehenden Ansprüche ausführt.

14. Computerprogrammprodukt nach Anspruch 12, wobei das Computerprogrammprodukt als Applikation auf einem mobilen Kommunikationsgerät ausgeführt wird.
